(19) Europäisches Patentamt
European Patent Office
Office européen des brevets

(11) **EP 1 933 542 A1**

(12) **EUROPEAN PATENT APPLICATION**

(43) Date of publication:
**18.06.2008 Bulletin 2008/25**

(51) Int Cl.:
**H04M 3/30** (2006.01)   **H04B 3/46** (2006.01)

(21) Application number: **08153027.1**

(22) Date of filing: **26.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.11.1999  ZA 9906943**
         **09.11.1999  ZA 9907016**

(62) Document number(s) of the earlier application(s) in accordance with Art. 76 EPC:
**00968176.8 / 1 226 707**

(71) Applicant: **Spescom Limited**
**Midrand 1685 (ZA)**

(72) Inventors:
• **Harrison, Ian**
  **7530, Tygervalley 7530 / ZA (ZA)**

• **Chester, Steven, John**
  **7530, Tygervalley 7530 / ZA (ZA)**
• **Crone, Vivian, John**
  **2094, 2094 Johannesburg / ZA (ZA)**
• **Du Rand, Andre**
  **0157, 0157 Pretoria / ZA (ZA)**
• **Fouche, Pierre, Ivor**
  **1708, 1708 Johannesburg / ZA (ZA)**
• **Weiss, Martin**
  **2021, Bryanston 2021 / ZA (ZA)**

(74) Representative: **ten Brink, Carsten et al**
**Murgitroyd & Company,**
**165-169 Scotland Street**
**Glasgow G5 8PL (GB)**

Remarks:
This application was filed on 19-03-2008 as a divisional application to the application mentioned under INID code 62.

(54) **Subscriber line test system**

(57)    A slave unit (10) for being used in a system (12) for testing a telecommunication line (14) is provided. The system (12) includes a central unit (16), at least one said slave unit (10) and threshold detection means (36). The central unit (16) includes signal generation means (20) capable of generating a test signal (26) of increasing amplitude or frequency and is operatively connected to an exchange end of the line. The central unit further includes comparator means connected to the signal generation means. The slave unit (10) is connected in use to a subscriber unit end of the telecommunication line (14) and is operable under control of the central unit (16) selectively to disconnect the subscriber unit. The threshold detection means (38) detects when the test signal (26) reaches a predetermined threshold and, in response thereto, the comparator means (38) compares the predetermined threshold with the amplitude of the test signal (26) applied to the telecommunication line (14) when the predetermined threshold is reached. From the comparison line attenuation may be determined.

FIG 2

**Description**

This invention relates to telecommunications. It relates in particular to a system for, and method of, testing a telecommunication line, more specifically to a slave unit adapted for being used in the system and method.

The invention suggests a system for testing a telecommunication line (hereinafter also termed as line). Said system comprises a central unit, at least one remote or slave unit (hereinafter termed as slave unit), and threshold detection means.

Said central unit comprises a signal generation means and comparator means. Said signal generation means is or are capable of generating a test signal of increasing amplitude or of increasing frequency, the signal generation means being operatively connected to an exchange end of the line. Said comparator means are connected to the signal generation means.

Said at least one slave unit is connectable to a subscriber unit end of the line. Each slave unit is operable under control of the central unit selectively to disconnect the subscriber unit.

Said threshold detection means is or are adapted for detecting when a test signal reaches a predetermined threshold. In response to the test signal the comparator means compares the predetermined threshold with the amplitude of the test signal applied to the line when the predetermined threshold is reached.

Preferably, the central unit includes line connection means for progressively connecting the signal generation means to a plurality of lines in an automated fashion thereby to test a plurality of lines.

In order to facilitate use of the invention in the field, the system may include a portable housing in which the central unit is mounted. In certain embodiments of the invention, the threshold detection means is provided in the central unit and connected in a series configuration. However, in other embodiments, the threshold detection means is provided in the slave unit.

The slave unit may include a controller, typically a microprocessor based controller, for controlling operation of the unit and shorting means connected to the subscriber unit end of the line. The controller may be responsive to the threshold detection means and, when the predetermined threshold is reached, the controller may be operable to activate the shorting means to short-circuit the line in response to which the comparator means compares the predetermined threshold with the amplitude of the test signal applied to the line.

In more sophisticated embodiments of the invention, the test signal is of a set frequency and of increasing amplitude. The test signal is typically a sine wave signal, the actual frequency of the signal differing in various different applications.

Preferably, the threshold detection means include filter means for filtering the test signal received by the threshold detection means. More preferably, the filter means is an adjustable filter operable to adjust its filtering characteristics under control of the controller. For example, the filter may be a bandpass filter and the controller may be operable to adjust its centre frequency upon command from the central unit.

The signal generation means may be operable selectively to generate a plurality of test signals at different frequencies and the controller may adjust the centre frequency of the filter to correspond to the frequency of the particular test signal.

Advantageously, the slave unit may include a power supply unit which sources power from the telecommunication line and powers circuitry of the slave unit.

The slave unit may include a subscriber line interface circuit capable of protecting the subscriber unit. In addition or instead, the system may include switching means operable selectively to connect and to disconnect the subscriber unit and the threshold detection means to and from the line.

Further in accordance with the invention, there is provided a method of testing a telecommunication line, the method including applying a test signal of increasing amplitude or frequency to the line; sensing when the amplitude of the test signal reaches a predetermined threshold; and comparing the predetermined threshold and the amplitude of the test signal applied to the line when the predetermined threshold is reached.

The method may include applying the test signal progressively in an automated fashion to a plurality of lines thereby to test the plurality of lines one at a time.

In certain circumstances, the predetermined threshold is sensed at a subscriber unit end of the line. In other circumstances, the predetermined threshold is sensed at an exchange end of the line.

The method may include shorting a subscriber unit end of the line when the predetermined threshold is reached to trigger the comparison between the predetermined threshold and the amplitude of the test signal applied to the line.

The method may include applying a test signal of a set frequency and increasing amplitude to the line. Preferably, the method includes applying a plurality of test signals at different frequencies and adjusting a centre frequency of a filter at the subscriber unit end of the line and sensing when the predetermined threshold is reached at each different frequency.

Still further in accordance with the invention, there is provided a slave unit including connection means connectable to a subscriber unit and to a subscriber unit end of a telecommunication line, the connection means being operable under control of a central unit selectively to disconnect the subscriber unit from the line; and threshold detection means for detecting when a test signal applied to the line at the central unit reaches a predetermined threshold at the subscriber unit end, the threshold detection means being operable to communicate that the predetermined threshold-has been reached to the central unit.

The slave unit may include a controller for controlling operation of the unit and shorting means connected to the subscriber unit end of the line. The controller may be responsive to the threshold detection means and, when the predetermined threshold is reached, the controller may be operable to activate the shorting means to short-circuit the line in response to which comparator means at the exchange end of the line compares the predetermined threshold with the amplitude of the test signal applied to the line.

The test signal is typically of a set frequency and of increasing amplitude, the threshold detection means including filter means for filtering the test signal fed into the threshold detection means.

The filter means is preferably an adjustable filter operable to adjust its filtering characteristics under control of the controller. The filter may be a bandpass filter and the controller may be operable to adjust its centre frequency upon command from the central unit.

In certain embodiments, the slave unit includes a power supply unit which sources power from the telecommunication line and powers circuitry of the slave unit.

The slave unit may include a subscriber line interface circuit capable of protecting the subscriber unit. Further, the slave unit may include switching means operable selectively to connect and to disconnect the subscriber unit and the threshold detection means to and from the line.

Still further in accordance with the invention, there is provided central testing apparatus for testing at least one telecommunication line, the apparatus being connectable to an exchange end of the line and including a central unit including control means for controlling operation of a slave unit operatively connected to a subscriber unit end of the line; signal generation means capable of applying a test signal of increasing amplitude or frequency to the line ; and comparator means to compare the amplitude of the test signal applied to the line with the predetermined threshold when the predetermined threshold is detected by the slave unit.

The central unit may include line connection means for progressively connecting the signal generation means to a plurality of lines in an automated fashion thereby to test a plurality of lines. The apparatus may include a portable housing in which the central unit is mounted.

The apparatus typically includes sensing means for sensing when the line is shorted and, in response thereto, the comparator means compares the predetermined threshold with the amplitude of the test signal.

The signal generation means may be operable selectively to generate a plurality of test signals at different frequencies and provide an instruction signal to the slave unit to adjust a centre frequency of its filter to correspond to the frequency of the particular test signal.

It is to be appreciated that for the purposes of this specification the term "slave unit" is intended to include so-called maintenance termination units (MTUs), or the like.

The invention is now described, by way of example, with reference to the accompanying diagrammatic drawings.

In the drawings,

FIG 1 shows a schematic block diagram of a slave unit in accordance with the invention;

FIG 2 shows a schematic block diagram of a system, also in accordance with the invention, which includes the slave unit of FIG 1;

FIG 3 shows a schematic block diagram of a further embodiment of the system, in accordance with the invention, which includes a threshold detector located in a central unit of the system;

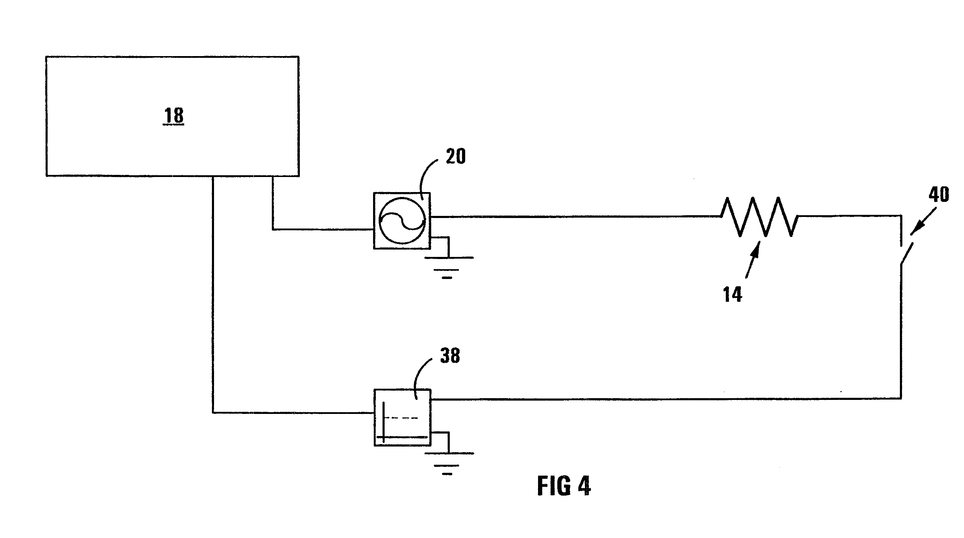

FIG 4 shows a schematic equivalent circuit of the system of FIG 3;

FIG 5 shows a schematic flow chart of operations carried out by the central unit;

FIG 6 shows a schematic flow chart of operations carried out by the slave unit of FIG 1;

FIG 7 shows a schematic block diagram of a yet further embodiment of the system, also in accordance with the invention, for testing a telecommunication line;

FIG 8 shows a graphic representation of a test signal applied to the line by a central unit of the system;

FIG 9 shows a graphic representation of the test signal received at a slave unit or MTU of the system of FIG 7;

FIG 10 shows a graphic representation of the normalised loss on the telecommunication line; and

FIG 11 shows an equivalent circuit of the telecommunication line.

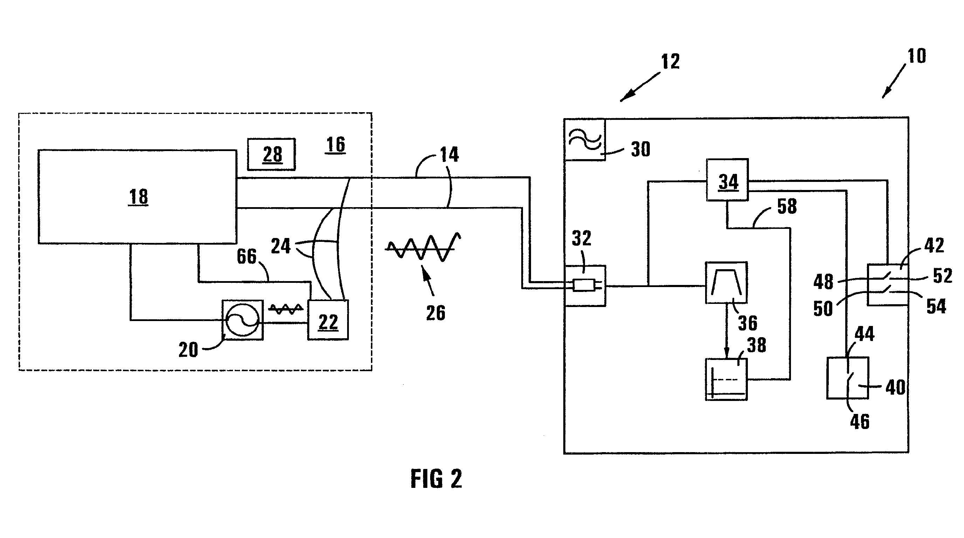

Referring to the drawings, reference numeral 10 generally indicates a slave unit in accordance with the invention. The slave unit 10 forms part of a system 12 (see FIG 2), also in accordance with the invention, for testing attenuation on a telecommunication line 14. The system 12 further includes a central unit 16 which is typically connected at an exchange end of the line 14. As described in more detail below, the system 12 is operable to perform maintenance tests on the telecommunication line 14 in a single ended testing fashion.

The central unit 16 includes a remote test unit (RTU) 18 as one example for comparator means, a signal generator 20, and a variable gain amplifier 22 connected via lines 24 to the telecommunication line 14. Both the signal generator 20 and the gain amplifier 22, or both units in combination, are herein referred to as signal generation means. In use, the signal generator 20 and the variable gain amplifier 22 generate a test signal 26 which is sequentially applied to a plurality of telecommunication lines by means of a switching arrangement 28 (line connection means) for sequentially test a plurality of telecommunication lines.

Each telecommunication line 14 connected to the central unit 16 includes a slave unit 10 which is serially connected to customer premises equipment (CPE), i.e. a subscriber unit, such as a subscriber telephone unit or the like. The slave unit 10 includes a power supply unit 30, a subscriber line interface circuit or SLIC 32, control means for controlling the operation of the slave unit 10 in the form of a microprocessor based controller 34, filter means in the form of a bandpass filter 36, threshold detection means in the form of a threshold detector 38, shorting means in the form of a short circuit switch 40, and connection means in the form of CPE disconnect switches 42.

Contacts 44, 46 of the short circuit switch 40, and contacts 48, 50 of the CPE disconnect switches 42 are connected to the telecommunication line 14. Contacts 52, 54 of the CPE disconnect switches 42 are connected to the relevant subscriber unit. The CPE disconnect switches 42 selectively connect and disconnect the subscriber unit to the telecommunication line 14 on command from the central unit 16.

The subscriber line interface 32 (SLIC) provides protection to the subscriber unit and to the slave unit 10 against voltage surges, lightning spikes, or the like. Optionally, the subscriber line interface 32 (SLIC) also matches the impedance of the various components of the slave unit 10 to the impedance of the telecommunication line 14.

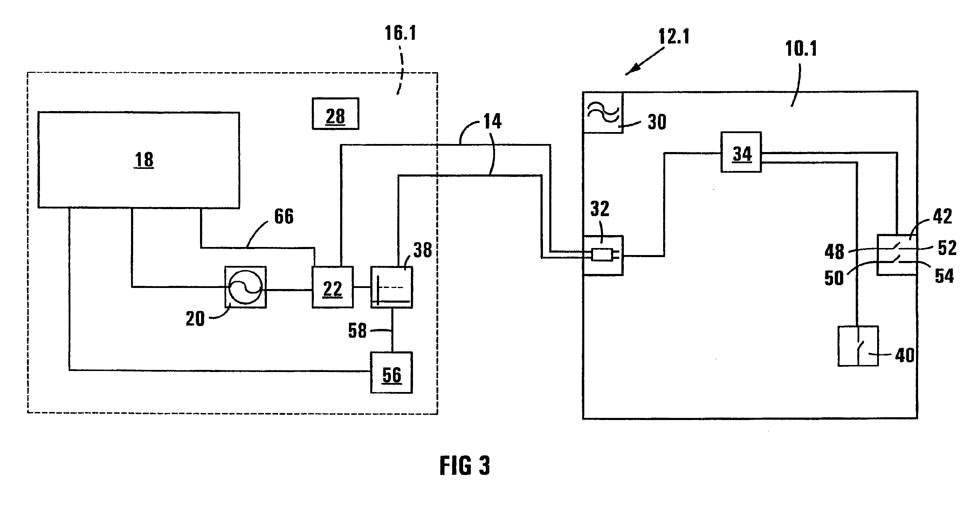

Referring in particular to FIG 3 of the drawings, reference numeral 12.1 generally indicates a further embodiment of a system, in accordance with the invention, for testing the telecommunication line 14.

The system 12.1 of FIG 3 substantially resembles the system 12 shown in FIG 2 and, accordingly, like reference numerals have been used to indicate the same or similar features unless otherwise indicated.

The main difference between the system 12.1 of FIG 3 and the system 12 shown in FIG 2, is that the threshold detector 38, is not provided in the slave unit 10.1 but rather in the central unit 16.1. Further, the central unit 16.1 includes a microprocessor 56 which is connected to the threshold detector 38 via line 58. As described in more detail below, during operation of the systems 12 and 12.1, the remote test unit 18 (RTU) instructs the microprocessors 34 and 56 respectively to monitor the threshold detector 38 to ascertain when the predetermined threshold is reached. Further, once the predetermined threshold is reached, the microprocessors 34 and 56 instruct the remote test unit 18 (RTU) accordingly.

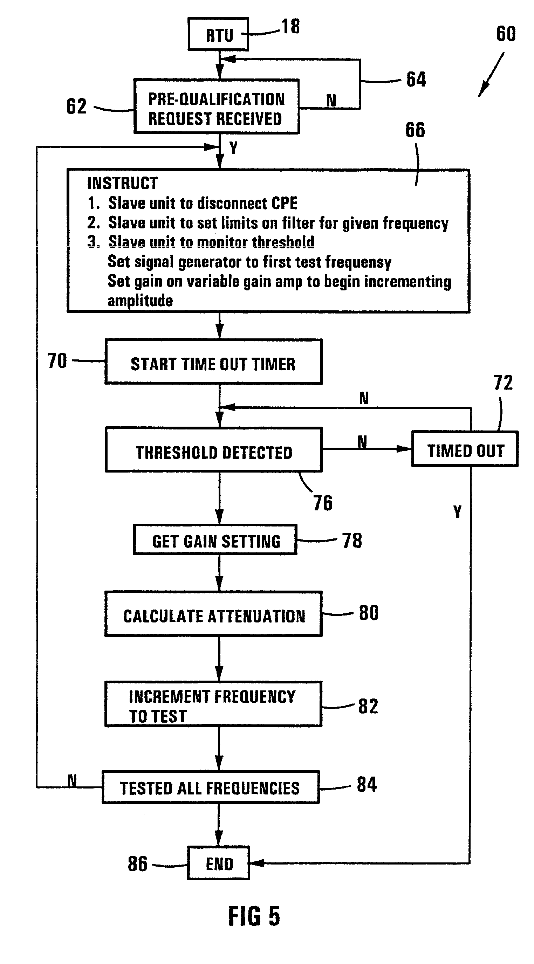

Referring in particular to FIG 5 of the drawings, reference numeral 60 generally indicates a schematic flow chart of various functions or operations performed by the central unit 16, 16.1. As mentioned above, the central unit 16, 16.1 is operable sequentially to test or perform prequalification tests on a plurality of different telecommunication lines 14. Initially, the remote test unit 18 (RTU) awaits a request for prequalification testing as shown at block 62. If no test request is received, the system loops as shown at line 64 until a request is received.

If, however, a request for testing of a particular telecommunication line 14 is received, as shown at block 66, the central unit 16, 16.1 applies an instruction signal on the telecommunication line 14 to which the slave unit 10, 10.1 is responsive. In particular, the instruction signal is fed into the slave unit 10, 10.1 via the subscriber line interface 32 (SLIC) and, upon receipt of the instruction signal, the microprocessor 34 switches the CPE disconnect switches 42 thereby to disconnect any subscriber unit from the telecommunication line 14. Thereafter, the remote test unit 18 (RTU) selects a first frequency at which the line telecommunication 14 is to be tested.

Operation of the System 12

In the system 12, the remote test unit 18 (RTU) instructs the frequency generator 20 to generate a test signal 26 at the particular frequency and also sends a frequency instruction signal along the line telecommunication 14 to which the slave unit 10 is responsive. In particular, upon receipt of the frequency instruction signal, the controller 34 adjusts a centre frequency of the bandpass filter 36 thereby to filter out any signals not at the particular selected frequency. The test signal 26 which is sourced from the signal generator 20 and progressively amplified by the variable gain amplifier 22, is applied to the line telecommunication 14 and therefore received by the slave unit 10. The test signal 26 is fed through the bandpass filter 36 to the threshold detector 38 to monitor the amplitude of the test signal 26. When the test signal 26, after a period of time, has reached the predetermined threshold of the threshold detector 38, the event is detected by the controller 34 via line 58. The controller 34 then activates the short circuit switch 40 which short-circuits the line telecommunication 14. The central unit 16 comprises sensing means (not shown) for detecting that the line has in fact been shorted and measures the particular amplitude of the test signal 26 at which the short circuit switch 40 was triggered. The remote test unit 18 (RTU), which is connected via line 66 to the variable gain amplifier 22, then calculates line attenuation by comparing (hence the designation as comparator means) the amplitude of the test signal transmitted with the predetermined threshold of the threshold detector 38. For example, the loss along the telecommunication line 14 may be calculated as follows:

$$dB_{loss} = -10 \cdot \log_{10} \frac{A \times A_{VG}}{T},$$

wherein $A$ is the amplitude of the test signal 26, $A_{VG}$ is a gain and T is the predetermined threshold.

Once the test signal 26 at a particular frequency with an increasing amplitude has been applied to the telecommunication line 14, a timer is started as shown at block 70 (see FIG 5). If the duration of the timer has lapsed (see block 72), then the test procedure is terminated as shown at block 74. If, however, the timeout duration has not lapsed, then the threshold detector 38 monitors to ascertain whether or not the predetermined threshold has been reached as shown at block 76. If the predetermined threshold has been reached, the remote test unit 18 (RTU) obtains the gain ($A_{VG}$) of the variable gain amplifier 22 via line 66 as shown at block 78. Thereafter, the remote test unit 18 (RTU) calculates the attenuation as described above and shown at block 80. The selected frequency is then incremented by the remote test unit 18 (RTU) and the signal generator 20 is then instructed to generate the next frequency as shown at block 82. The aforementioned procedure is followed until the different frequencies have been tested as shown at block 84 whereafter the test procedure is terminated as shown at block 86.

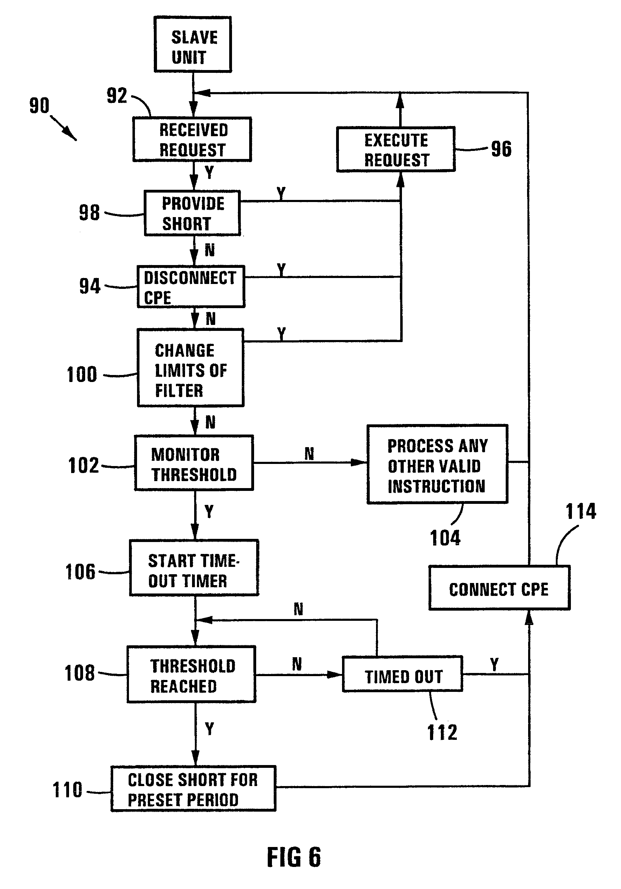

Referring in particular to FIG 6 of the drawings, reference numeral 90 generally indicates a schematic flow chart of various functions or operations performed by the slave unit 10, 10.1. As shown at block 92, the slave unit 10 enters a wait cycle until a prequalification test request signal is received from the central unit 16. Upon receipt of a request signal the subscriber unit is disconnected (see block 94).

Thereafter, upon receipt of a frequency instruction signal from the central unit 16, the centre frequency of the filter 36 is changed as shown at block 100. The test signal 26 is then monitored to ascertain when the predetermined threshold is reached as shown at block 108. Once the threshold is reached, as described above, telecommunication line 14 is shorted by the short circuit switch 40 as shown at block 110. Thereafter, upon receipt of a further frequency instruction signal from the central unit 16, the centre frequency of the filter 36 is changed as shown at block 100. The test signal 26 is continuously monitored to ascertain whether or not the predetermined threshold has been reached as shown at block 108 and, if not, any other valid instructions received from the central unit 16 are processed as shown at block 104.

As shown at block 106, a timer is started and, if a threshold has been reached as shown at block 108, the short circuit switch 40 is activated as shown at block 110. As shown at block 112, the duration of the timer is monitored and, if the predetermined time has lapsed, the subscriber unit is reconnected as shown at block 114.

Operation of the System 12.1

The system 12.1 of FIG 3 operates substantially in the same manner as the system 12 shown in FIG 2 except that, as the threshold detector 38 is located in the central unit 16.1, its operation is not controlled via the telecommunication line 14. The telecommunication line 14 merely controls the CPE switches 42 and the short circuit switch 40 via the controller 34 located in the slave unit 10.1. The threshold detector 38 detects when the predetermined threshold is reached and the microprocessor 56 instructs the remote test unit 18 (RTU) accordingly.

Operation of the System 12.2

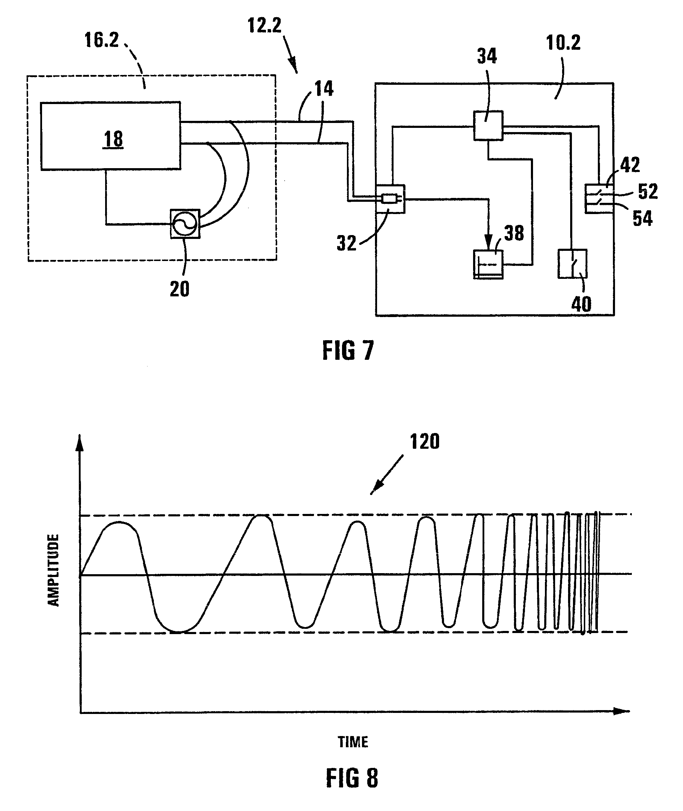

Referring in particular to Figures 7 to 10 of the drawings, reference numeral 12.2 generally indicates a further embodiment of a system, in accordance with the invention, for testing a telecommunication line 14. The system 12.2 resembles the systems 12, 12.1 and, accordingly, like reference numerals have been used to indicate the same or similar features.

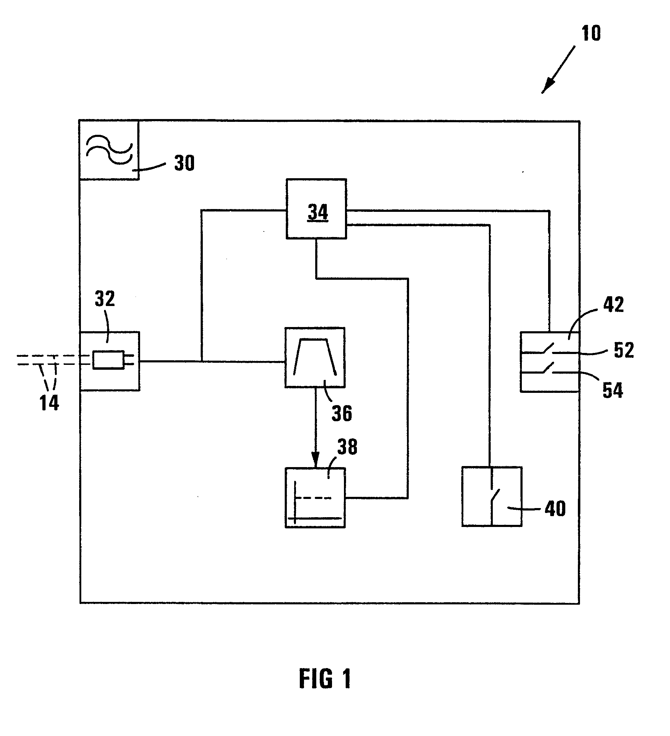

The system 12.2 includes a central unit 16.2 including a remote test unit 18 (RTU) and a signal generator 20. Unlike the signal generator 20 of the systems 12, 12.1 which generate a test signal 26 of increasing amplitude, the signal generator 20 of the system 12.2 generates a test signal 120 (see FIG 8) of constant amplitude but of increasing frequency. The slave unit 10.2 of FIG 7 substantially resembles the slave unit 10 shown e.g. in FIG 1 but does not include the bandpass filter 36. It preferably also includes a power supply unit 30.

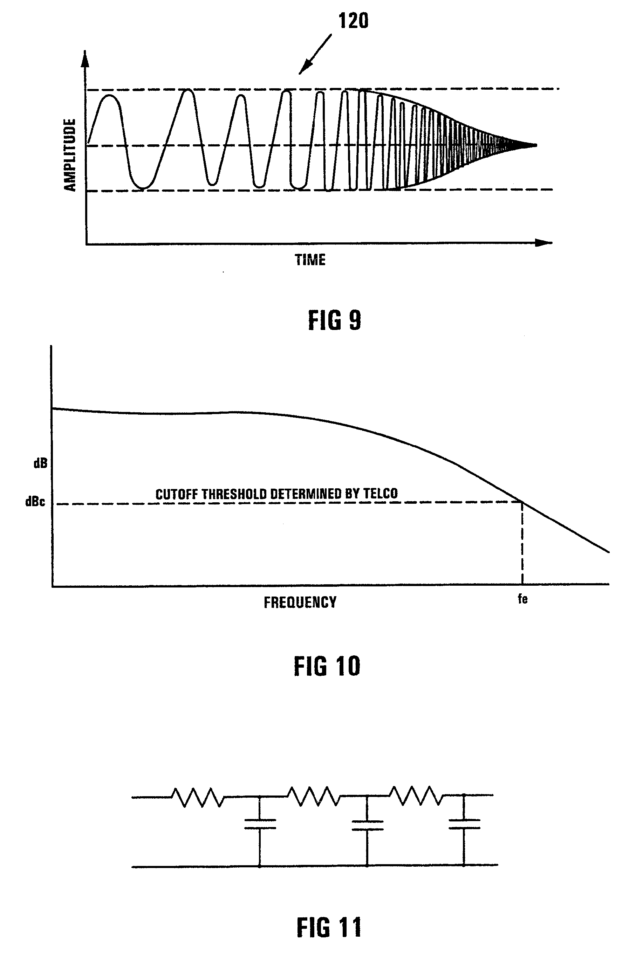

When testing telecommunication lines with the system 12.2, a switching arrangement (not shown) selectively connects the telecommunication line 14 to the remote test unit 18 (RTU) and the signal generator 20. The increasing frequency test signal 120 (FIG 9) is then applied to the telecommunication line 14. Due to the filter effect of the telecommunication line 14 (see equivalent circuit of the telecommunication line 14 as shown in FIG 11), the test signal 120 is progressively attenuated as the frequency of the test signal 120 is increased (see Figures 9 and 10). When the signal received by the slave unit 10.2 reaches or drops to a predetermined low value, the threshold detector 38 triggers the controller 34 to short the telecommunication line 14 by means of the short circuit switch 40. The shorted telecommunication line 14 is then detected by the central unit 16.2 and the attenuation in the telecommunication line 14 is determined as set out above with reference to the systems 12, 12.1.

It is believed that the time required to test the telecommunication line 14 may be reduced by the system 12.2. In particular, instead of applying a multitude of different test signals, each of a particular frequency and increasing amplitude, a single test signal 120 of constant amplitude and increasing frequency is applied, thereby reducing testing time especially when a large number of telecommunication lines 14 are to be tested. Further, unlike the system 12, the system 12.2 does not include a variable gain amplifier 22 in the central unit 16.2 and a bandpass filter 36 in the slave unit 10.2 thereby reducing manufacturing costs of the central unit 16.2 and the slave device 10.2.

It is believed that the invention, as illustrated, provides an enhanced system 12, 12.1, 12.2 for testing the telecommunication line 14.

Summarising the above, the invention, or specific aspects thereof, can briefly be described as: A slave unit 10 for being used in a system 12 for testing a telecommunication line 14 is provided. The system 12 includes a central unit 16, at least one said slave unit 10 and threshold detection means 36. The central unit 16 includes signal generation means 20 capable of generating a test signal 26 of increasing amplitude or frequency and is operatively connected to an exchange end of the line. The central unit further includes comparator means connected to the signal generation means. The slave unit 10 is connected in use to a subscriber unit end of the telecommunication line 14 and is operable under control of the central unit 16 selectively to disconnect the subscriber unit. The threshold detection means 38 detects when the test signal 26 reaches a predetermined threshold and, in response thereto, the comparator means 38 compares the predetermined threshold with the amplitude of the test signal 26 applied to the telecommunication line 14 when the predetermined threshold is reached. From the comparison line attenuation may be determined.

**Claims**

1. A slave unit (10) including
   connection means (42) connectable to a subscriber unit and to a subscriber unit end of a telecommunication line (14),
   the connection means (42) being operable under control of a central unit (16) selectively to disconnect the subscriber unit from the telecommunication line (14); and
   threshold detection means (38) for detecting when a test signal (26), particularly an amplitude of a test signal (26), applied to the telecommunication line (14) at the central unit (16) reaches a predetermined threshold at the subscriber unit end,
   the threshold detection means (38) being operable to communicate that the predetermined threshold has been reached to the central unit (16).

2. The slave unit of Claim 1, adapted for being used in a system (12) for testing a telecommunication line (14), the system (12) including
   a central unit (16) including signal generation means (20, 22) capable of generating a test signal (26) of increasing amplitude or frequency, the signal generation means (20, 22) being operatively connected to an exchange end of the telecommunication line (14);
   comparator means (18) connected to the signal generation means (20, 22);
   wherein the slave unit (10) is operable under control of the central unit (16) selectively to disconnect the subscriber unit, and
   wherein
   the comparator means (18), in response to the threshold detection means (38) detecting when the test signal (26) reaches a predetermined threshold, compares the predetermined threshold with the amplitude of the test signal (26) applied to the telecommunication line (14) when the predetermined threshold is reached.

3. The slave unit of Claim 1 or 2, including a controller (34) for controlling operation of the slave unit (10) and shorting means (40) connected to the subscriber unit end of the telecommunication line (14), the controller (34) being responsive to the threshold detection means (38) and, when the predetermined threshold is reached, the controller (34) being operable to activate the shorting means (40) to short-circuit the telecommunication line (14) in response to which comparator means (18) at the exchange end of the telecommunication line (14) compares the predetermined threshold with the amplitude of the test signal (26) applied to the telecommunication line (14).

4. The slave unit of Claim 1, 2 or 3, in which the test signal (26) is of a set frequency and of increasing amplitude, the threshold detection (38) means including filter means (36) for filtering the test signal (26) fed into the threshold detection means (38).

5. The slave unit of Claim 3 and 4, in which the filter means (36) is an adjustable filter (36) operable to adjust its filtering characteristics under control of the controller (34).

6. The slave unit of Claim 5, in which the adjustable filter (36) is a bandpass filter (36) and the controller (34) is operable to adjust its centre frequency upon command from the central unit (16).

7. The slave unit of any one of the preceding claims, including a power supply unit (30) which sources power from the telecommunication line (14) and powers circuitry of the slave unit (10).

8. The slave unit of any one of the preceding claims, including subscriber line interface circuit (32) capable of protecting the subscriber unit.

9. The slave unit of any one of the preceding claims,

**EP 1 933 542 A1**

including switching means operable selectively to connect and to disconnect the subscriber unit and the threshold detection means to and from the line.

**FIG 1**

FIG 2

EP 1 933 542 A1

FIG 3

EP 1 933 542 A1

FIG 4

RTU — 18

60

62 — PRE-QUALIFICATION
REQUEST RECEIVED    N    64

Y

66

INSTRUCT
1. Slave unit to disconnect CPE
2. Slave unit to set limits on filter for given frequency
3. Slave unit to monitor threshold
   Set signal generator to first test frequensy
   Set gain on variable gain amp to begin incrementing
   amplitude

70 — START TIME OUT TIMER

N

72

THRESHOLD DETECTED    N    TIMED OUT

N

76

GET GAIN SETTING — 78

Y

CALCULATE ATTENUATION — 80

INCREMENT FREQUENCY
TO TEST — 82

N    TESTED ALL FREQUENCIES — 84

86 — END

FIG 5

FIG 6

FIG 7

FIG 8

14

**120**

**FIG 9**

CUTOFF THRESHOLD DETERMINED BY TELCO

dB

dBc

FREQUENCY

fe

**FIG 10**

**FIG 11**

**European Patent Office**

**EUROPEAN SEARCH REPORT**

Application Number

EP 08 15 3027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 661 776 A (CHARLAND CLAUDE) 26 August 1997 (1997-08-26) * column 2, line 20 - column 74, line 25 * * column 9, line 1 - line 23 * ----- | 1-9 | INV. H04M3/30 H04B3/46 |
| A | US 5 402 073 A (ROSS ALAN) 28 March 1995 (1995-03-28) * abstract; figure 2 * ----- | 1-9 | |

TECHNICAL FIELDS SEARCHED (IPC)

H04M
H04B

The present search report has been drawn up for all claims

| Place of search | Date of completion of the search | Examiner |
|---|---|---|
| The Hague | 7 May 2008 | Willems, Branko |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 933 542 A1**

## ANNEX TO THE EUROPEAN SEARCH REPORT
## ON EUROPEAN PATENT APPLICATION NO.

EP 08 15 3027

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2008

| Patent document cited in search report | | Publication date | Patent family member(s) | | Publication date |
|---|---|---|---|---|---|
| US 5661776 | A | 26-08-1997 | AU | 4693893 A | 22-06-1994 |
| | | | BR | 9307506 A | 01-06-1999 |
| | | | CA | 2149517 A1 | 09-06-1994 |
| | | | WO | 9413090 A1 | 09-06-1994 |
| | | | EP | 0671098 A1 | 13-09-1995 |
| | | | JP | 8506220 T | 02-07-1996 |
| | | | US | 5550894 A | 27-08-1996 |
| US 5402073 | A | 28-03-1995 | AT | 205340 T | 15-09-2001 |
| | | | AU | 675644 B2 | 13-02-1997 |
| | | | AU | 3946193 A | 01-09-1993 |
| | | | BR | 9305806 A | 18-02-1997 |
| | | | CA | 2129002 A1 | 05-08-1993 |
| | | | CN | 1076067 A | 08-09-1993 |
| | | | DE | 69330712 D1 | 11-10-2001 |
| | | | DE | 69330712 T2 | 07-02-2002 |
| | | | EP | 0624292 A1 | 17-11-1994 |
| | | | JP | 7504302 T | 11-05-1995 |
| | | | RU | 2108669 C1 | 10-04-1998 |
| | | | WO | 9315564 A1 | 05-08-1993 |
| | | | US | 5243295 A | 07-09-1993 |

EPO FORM P0459

For more details about this annex : see Official Journal of the European Patent Office, No. 12/82

17